(19)

**Europäisches Patentamt**

**European Patent Office**

**Office européen des brevets**

(11) **EP 4 227 346 A1**

(12) **EUROPEAN PATENT APPLICATION**
published in accordance with Art. 153(4) EPC

(43) Date of publication:
16.08.2023 Bulletin 2023/33

(21) Application number: 21877269.7

(22) Date of filing: 01.09.2021

(51) International Patent Classification (IPC):
*C08G 69/26* (2006.01)  *D01F 6/60* (2006.01)
*D01F 6/80* (2006.01)

(52) Cooperative Patent Classification (CPC):
**C08G 69/26; D01F 6/60; D01F 6/80**

(86) International application number:
**PCT/JP2021/032063**

(87) International publication number:
**WO 2022/074966 (14.04.2022 Gazette 2022/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 08.10.2020 JP 2020170209

(71) Applicant: **MITSUBISHI GAS CHEMICAL COMPANY, INC.**
**Chiyoda-ku**
**Tokyo 100-8324 (JP)**

(72) Inventors:
• **YAMANAKA, Masaki**
**Hiratsuka-shi, Kanagawa 254-0016 (JP)**
• **MATSUMOTO, Nobuhiko**
**Hiratsuka-shi, Kanagawa 254-0016 (JP)**

(74) Representative: **Vossius & Partner**
**Patentanwälte Rechtsanwälte mbB**
**Siebertstraße 3**
**81675 München (DE)**

(54) **FILAMENT, STRUCTURE, RESIN COMPOSITION, AND METHOD FOR PRODUCING FILAMENT**

(57) Provided are: a filament containing a polyamide resin, the filament having a high strength and a high retention percentage of mechanical properties after water absorption; a structure; a resin composition; and a method for producing the filament. The filament includes a polyamide resin containing diamine-derived structural units and dicarboxylic acid-derived structural units. 70 mol% or more of the diamine-derived structural units are derived from xylylenediamine, and 70 mol% or more of the dicarboxylic acid-derived structural units are derived from $\alpha,\omega$-linear aliphatic dicarboxylic acid having from 11 to 14 carbons. The content of a compound with a molecular weight of 310 or more and 1000 or less is 0.1 mass% or more and 1.5 mass% or less, and thecontent of a compound with a molecular weight of less than 310 is 0.1 mass% or less.

EP 4 227 346 A1

**Description**

Technical Field

The present invention relates to a filament, a structure containing the filament, a resin composition suitable as a raw material of the filament, and a method for producing the filament. In particular, the present invention relates to a filament containing a polyamide resin as a main raw material.

Background Art

Filaments containing polyamide resins as main raw materials have been used in various purposes. Due to high strength, these polyamide filaments are highly useful. Thus, use of polyamide filaments as structures such as non-woven fabrics, adsorbents, filter fabrics, filter paper, or filters are being considered.

However, known polyamide filaments (e.g., polyamide filaments containing polyamide 66 as a main raw material) may cause a large reduction in strength due to water absorption, and when such known polyamide filaments are used as aqueous chemical treatment filters, considerable reduction in strength from the initial state is observed.

Furthermore, as polyamide filaments, polyamide filaments containing a polyamide resin made from m-xylylenediamine and adipic acid as a main raw material are disclosed (Patent Document 1). However, those are not satisfactory because of the reduction in strength after water absorption.

Citation List

Patent Documents

Patent Document 1: WO 2019/163062

Summary of Invention

Technical Problem

The present invention is to solve the issues described above, and an object of the present invention is to provide: a filament containing a polyamide resin, the polyamide resin having a high strength and a high retention percentage of mechanical properties after water absorption; a structure; a resin composition; and a method for producing the filament.

Solution to Problem

As a result of the studies by the present inventors for the object described above, it was found that the issues can be solved by precisely adjusting an amount of the low molecular weight component in a specific polyamide resin.

Specifically, the issues described above are solved by the following means.

<1> A filament including a polyamide resin, the polyamide resin containing diamine-derived structural units and dicarboxylic acid-derived structural units, 70 mol% or more of the diamine-derived structural units being derived from xylylenediamine, and 70 mol% or more of the dicarboxylic acid-derived structural units being derived from $\alpha,\omega$-linear aliphatic dicarboxylic acid having from 11 to 14 carbons, in which a content of a compound with a molecular weight of 310 or more and 1000 or less is 0.1 mass% or more and 1.5 mass% or less; and a content of a compound with a molecular weight of less than 310 is 0.1 mass% or less.

<2> The filament according to <1>, in which the filament is stretched.

<3> The filament according to <1> or <2>, in which the compound with the molecular weight of 310 or more and 1000 or less contains a cyclic compound containing one molecule of xylylenediamine and one molecule of $\alpha,\omega$-linear aliphatic dicarboxylic acid having from 11 to 14 carbons.

<4> The filament according to any one of <1> to <3>, in which from 30 to 100 mol% of the diamine-derived structural units are each derived from m-xylylenediamine, and from 0 to 70 mol% of the diamine-derived structural units are each derived from p-xylylenediamine.

<5> The filament according to any one of <1> to <4>, in which 70 mol% or more of the dicarboxylic acid-derived structural units are 1,12-dodecanedioic acid.

<6> The filament according to any one of <1> to <5>, in which, when the filament is subjected to moisture conditioning for 1 week in an environment at 23°C and a relative humidity of 50% and subsequently immersed in hydrochloric acid with a concentration of 10 mass% for 1 week, the filament has a retention percentage of 90% or more with respect to a tensile strength before chemical solution immersion, and when the filament is subjected to moisture conditioning for 1 week in an environment at 23°C and a relative humidity of 50% and subsequently immersed in an aqueous sodium hydroxide solution with a concentration of 10 mass% for 1 week, the filament has a retention percentage of 90% or more with respect to a tensile strength before chemical solution immersion.

<7> The filament according to any one of <1> to <6>, in which a single fiber fineness is from $2.0 \times 10^{-5}$ to 50 dtex.

<8> The filament according to any one of <1> to <7>, in which the filament is a multifilament.

<9> A structure containing the filament according to any one of <1> to <8>.

<10> The structure according to <9>, in which the structure is a non-woven fabric, an adsorbent, a filter fabric, a filter paper, or a filter.

<11> A resin composition comprising a polyamide resin and a compound with a molecular weight of 310 or more and 1000 or less, the polyamide resin containing diamine-derived structural units and dicarboxylic acid-derived structural units, 70 mol% or more of the diamine-derived structural units being derived from xylylenediamine, and 70 mol% or more of the dicarboxylic acid-derived structural units being derived from α,ω-linear aliphatic dicarboxylic acid having from 11 to 14 carbons, in which a content of the compound with the molecular weight of 310 or more and 1000 or less is 0.1 mass% or more and 1.5 mass% or less, and a content of a compound a molecular weight of less than 310 is 0.1 mass% or less.

<12> The resin composition according to <11>, in which the filament is for a non-woven fabric, an adsorbent, a filter fabric, a filter paper, or a filter.

<13> A method for producing the filament according to any one of <1> to <8>, the method including spinning the resin composition according to <11> by a melt spinning method or an electrospinning method.

Advantageous Effects of Invention

By the present invention, a filament containing a polyamide resin, the filament having a high strength and a high retention percentage of mechanical properties after water absorption; a structure; a resin composition; and a method for producing the filament can be provided.

Description of Embodiments

Hereinafter, embodiments for carrying out the present invention (referred to simply as "the present embodiment" below) will be described in detail. Note that the following present embodiments are examples for describing the present invention, and the present invention is not limited to the present embodiments.

In the present description, "from ... to ..." or "of ... to ..." is used to mean that the numerical values described before and after "to" are included as the lower limit and the upper limit, respectively.

In the present description, various physical property values and characteristic values are at 23°C unless otherwise noted.

The filament of the present embodiment contains a polyamide resin, the polyamide resin containing diamine-derived structural units and dicarboxylic acid-derived structural units, 70 mol% or more of the diamine-derived structural units being derived from xylylenediamine, and 70 mol% or more of the dicarboxylic acid-derived structural units being derived from α,ω-linear aliphatic dicarboxylic acid having from 11 to 14 carbons, in which a content of a compound with a molecular weight of 310 or more and 1000 or less is 0.1 mass% or more and 1.5 mass% or less, and a content of a compound with a molecular weight of less than 310 is 0.1 mass% or less. By employing such a configuration, a filament having a high strength and a high retention percentage of mechanical properties after water absorption is obtained. More specifically, a filament having an excellent linear strength and a high modulus of elasticity after water absorption and a high retention percentage of tensile strength is obtained. Furthermore, a filament also having excellent continuous productivity and chemical resistance is obtained.

The reason for this is presumed to be as follows. That is, the filament of the present embodiment uses xylylenediamine and α,ω-linear aliphatic dicarboxylic acid having from 11 to 14 carbons as raw material monomers for the polyamide resin. By using the polyamide resin made of such raw materials, water is less likely to be absorbed by the filament, and the reduction in mechanical properties can be suppressed. Furthermore, it is presumed that the hydrolysis is less likely to occur and the low chemical resistance is achieved. Furthermore, it is presumed that, by setting a content of the compound with a molecular weight of 310 or more and 1000 or less to 0.1 mass% or more and 1.5 mass% or less, stretchability of the polyamide resin is enhanced, and the high strength of the filament can be achieved. In addition, it is presumed that the high mechanical properties after water absorption can be maintained because the compound with a molecular weight of 310 or more and 1000 or less is remarkably less likely to fall off after immersion in water compared to a compound with a molecular weight of less than 310.

Polyamide Resin

The polyamide resin used in the present embodiment contains diamine-derived structural units and dicarboxylic acid-derived structural units. 70 mol% or more of the diamine-derived structural units are derived from xylylenediamine, and 70 mol% or more of the dicarboxylic acid-derived structural units are derived from $\alpha,\omega$-linear aliphatic dicarboxylic acid having from 11 to 14 carbons. A content of a compound with a molecular weight of 310 or more and 1000 or less is 0.1 mass% or more and 1.5 mass% or less, and a content of a compound with a molecular weight of less than 310 is 0.1 mass% or less. Hereinafter, in the present description, this polyamide resin may be referred to as "polyamide resin (A)".

In the polyamide resin (A), 70 mol% or more of the diamine-derived structural units are derived from xylylenediamine; preferably 80 mol% or more, more preferably 90 mol% or more, even more preferably 95 mol% or more, and yet even more preferably 99 mol% or more, of the diamine-derived structural units are derived from xylylenediamine. Furthermore, the upper limit is 100 mol%.

The xylylenediamine preferably contains from 10 to 100 mol% of m-xylylenediamine and from 90 to 0 mol% of p-xylylenediamine (however, the total of the m-xylylenediamine and p-xylylenediamine does not exceed 100 mol%), more preferably include from 30 to 100 mol% of m-xylylenediamine and from 70 to 0 mol% of p-xylylenediamine, and even more preferably include from 50 to 100 mol% of m-xylylenediamine and from 0 to 50 mol% of p-xylylenediamine. Furthermore, in the xylylenediamine, the total amount of m-xylylenediamine and p-xylylenediamine is preferably 95 mol% or more, more preferably 99 mol% or more, and even more preferably 100 mol%.

Examples of the diamine component besides xylylenediamine include aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, p-phenylenediamine, and bis(aminomethyl)naphthalene. One type of these can be used, or two or more types can be mixed and used.

In the polyamide resin (A), 70 mol% or more of the dicarboxylic acid-derived structural units are derived from $\alpha,\omega$-linear aliphatic dicarboxylic acid having from 11 to 14 carbons (preferably $\alpha,\omega$-linear aliphatic dicarboxylic acid having from 12 to 14 carbons, and more preferably 1,12-dodecanedioic acid). Furthermore, the proportion of the $\alpha,\omega$-linear aliphatic dicarboxylic acid having from 11 to 14 carbons in the dicarboxylic acid-derived structural units is preferably 80 mol% or more, more preferably 90 mol% or more, even more preferably 95 mol% or more, and yet even more preferably 99 mol% or more. Furthermore, the upper limit is 100 mol%.

Examples of dicarboxylic acid components other than the $\alpha,\omega$-linear aliphatic dicarboxylic acid having from 11 to 14 carbons include $\alpha,\omega$-linear aliphatic dicarboxylic acid having 10 or less carbons, such as succinic acid, glutaric acid, pimelic acid, suberic acid, azelaic acid, adipic acid, and sebacic acid; phthalic acid compounds, such as isophthalic acid, terephthalic acid, and ortho-phthalic acid; and naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used alone, or two or more types can be mixed and used.

Here, "containing diamine-derived structural units and dicarboxylic acid-derived structural units" means that the amide bond constituting the polyamide resin (A) is formed by a bond between a dicarboxylic acid and a diamine. In addition, the polyamide resin (A) contains any other moiety, such as a terminal group, in addition to the dicarboxylic acid-derived structural units and the diamine-derived structural units. Furthermore, the XD-based polyamide may contain a repeating unit having an amide bond not derived from the bond between a dicarboxylic acid and a diamine, a trace amount of an impurity, or the like. Specifically, for the polyamide resin (A), in addition to the diamine component and the dicarboxylic acid component, a lactam, such as $\varepsilon$-caprolactam or laurolactam; or an aliphatic aminocarboxylic acid, such as aminocaproic acid or aminoundecanoic acid; can also be used as a copolymer component constituting the polyamide resin within a range that does not impair the effects of the present invention. In the present embodiment, preferably 90 mass% or more, more preferably 95 mass% or more, and even more preferably 98 mass% or more, of the polyamide resin (A) is the diamine-derived structural unit or the dicarboxylic acid-derived structural unit.

In the polyamide resin (A) used in the present embodiment, the content of the compound with a molecular weight of 310 or more and 1000 or less is 0.1 mass% or more and 1.5 mass% or less. By allowing a trace amount of a compound with such a molecular weight to be contained, stretchability is enhanced, and high linear strength of the filament can be achieved. Furthermore, also after water absorption, because the compound with a molecular weight of 310 or more and 1000 or less is less likely to fall off from the filament, it becomes possible to maintain high mechanical properties.

The type and the like of the compound with a molecular weight of 310 or more and 1000 or less is not particularly specified and is a raw material monomer of the polyamide resin (A), an oligomer derived from another component added during production of the polyamide resin (A), or the like. In the present embodiment, the compound with the molecular weight of 310 or more and 1000 or less preferably contains a cyclic compound containing one molecule of xylylenediamine and one molecule of $\alpha,\omega$-linear aliphatic dicarboxylic acid having from 11 to 14 carbons. By allowing such a cyclic compound to be contained in a predetermined amount, the effect of an embodiment of the present invention is more effectively achieved. In particular, in a case where the raw material dicarboxylic acid of the polyamide resin is sebacic acid, the molecular weight of the cyclic compound made of one molecule of xylylenediamine and one molecule of sebacic acid is small. Because the shape of the filament is thin, when the filament is immersed in water, such a cyclic compound readily exudes from the filament, and the strength retention percentage tends to decrease. In the present embodiment, by setting the number of carbons of the $\alpha,\omega$-linear aliphatic dicarboxylic acid large, this is avoided.

Furthermore, the polyamide resin (A) preferably contains a compound having at least a molecular weight of 310 to 700, and more preferably contains a compound having at least a molecular weight of 310 to 500, as the compound having a molecular weight of 310 or more and 1000 or less.

Furthermore, the content of the compound with a molecular weight of 310 or more and 1000 or less in the polyamide resin (A) is preferably 0.3 mass% or more, more preferably 0.5 mass% or more, and even more preferably 0.6 mass% or more, and preferably 1.2 mass% or less, and more preferably 1.0 mass% or less.

The polyamide resin (A) may contain only one type of the compound with a molecular weight of 310 or more and 1000 or less or may contain two or more types of the compounds with a molecular weight of 310 or more and 1000 or less. When two or more types of mold release agents are contained, the total amount thereof is preferably in the above range.

The polyamide resin (A) used in the present embodiment has a content of a compound with a molecular weight of less than 310 of 0.1 mass% or less. By employing such a configuration, elution of a low molecular weight component at the time of immersion in water can be effectively suppressed. In particular, in a case where the filament of the present embodiment is used as a filter to filtrate an aqueous solution, when immersed in water, a low molecular weight component contained in the filament readily flows out, and issues may occur in performances as a filter. In the present embodiment, by setting the content of the compound with a molecular weight of less than 310 to 0.1 mass% or less, such outflow of a low molecular weight component can be effectively suppressed. The lower limit value of the content of the compound with a molecular weight of less than 310 is ideally 0 mass%, and practically the lower limit value is a detection limit.

The number average molecular weight (Mn) of the polyamide resin (A) used in the present embodiment is preferably from 6000 to 50000, more preferably from 8000 to 48000, and even more preferably from 9000 to 46000. The polyamide resin with a number average molecular weight in such a range provides better molding processability.

Note that the number average molecular weight (Mn) can be determined by gel permeation chromatography (GPC) analysis based on calibration with standard polymethylmethacrylate (PMMA).

The polyamide resin (A) used in the present embodiment may have a melting point or may have no melting point. When it does have a melting point, the melting point is preferably from 170 to 280°C, and more preferably from 170 to 250°C. Such a range can provide superior moldability into a structure and can provide a filament having superior thermal resistance.

Note that, in an embodiment of the present invention, the melting point means a temperature at which an endothermic peak reaches its maximum during a temperature increase when observed by a differential scanning calorimetry (DSC) method. Specifically, using a DSC instrument and a sample amount of 1 mg, a polyamide resin is melted by heating to a temperature that is equal to or higher than a predicted melting point from room temperature (25°C) at a temperature increase rate of 10°C/min while nitrogen is streamed at 30 mL/min as an atmosphere gas, and then the melted polyamide resin is rapidly cooled using dry ice, and the temperature is increased again to a temperature that is equal to or higher than the melting point at a rate of 10°C/min. The temperature at which an endothermic peak reaches its maximum at this time is referred to as the melting point.

Furthermore, in the filament of the present embodiment, preferably 70 mass% or more, more preferably 80 mass% or more, even more preferably 90 mass% or more, yet even more preferably 95 mass% or more, and yet even more preferably 98 mass% or more, of the mass of the filament is the polyamide resin (A).

The filament of the present embodiment may contain only one type of the polyamide resin (A) or may contain two or more types thereof. When two or more types of mold release agents are contained, the total amount thereof is preferably in the above range.

Other Component

The filament of the present embodiment may contain a polyamide resin besides the polyamide resin (A), a thermoplastic resin besides the polyamide resin, a resin additive, and the like in a range that does not remarkably deviate from the effect of the present embodiment.

Examples of the polyamide resin other than the polyamide resin (A) include polyamide 4, polyamide 6, polyamide 11, polyamide 12, polyamide 46, polyamide 66, polyamide 6/66, polyamide 610, polyamide 612, poly(hexamethylene terephthalamide) (polyamide 6T), poly(hexamethylene isophthalamide) (polyamide 6I), polyamide 66/6T, polyamide 9T, polyamide 9MT, polyamide 6I/6T, polyamide XD6 (polyxylylene adipamide), polyamide XD10 (polyxylylene sebacamide), polyamide 10T, 1,3-BAC 10I (polyamide resin made from 1,3-bis(amino-methyl)cyclohexane, sebacic acid, and isophthalic acid), and 1,4-BAC 10I (polyamide resin made from 1,4-bis(amino-methyl)cyclohexane, sebacic acid, and isophthalic acid). Polyamide 6, polyamide 66, polyamide 666, polyamide 610, and polyamide 612 are preferred.

The filament of the present embodiment may contain only one type of the polyamide resin other than the polyamide resin (A) or may contain two or more types thereof. When two or more types of mold release agents are contained, the total amount thereof is preferably in the above range.

Examples of the thermoplastic resin other than the polyamide resin include one or more types of polyolefin resins such as polyethylene and polypropylene; polyester resins such as polyethylene terephthalate and polybutylene terephthalate; polycarbonate resins; polyoxymethylene resins; polyether ketones, polyether sulfones, and thermoplastic polyether imides.

Furthermore, the filament of the present embodiment may have a configuration including substantially no thermoplastic resin besides the polyamide resin (A). "Including substantially no" means that the content of the thermoplastic resin other than the polyamide resin (A) in the filament of the present embodiment is 5 mass% or less, preferably 3 mass% or less, and more preferably 1 mass% or less, of the content of the polyamide resin (A).

In the filament of the present embodiment, additives such as antioxidants, thermal stabilizers, hydrolysis-resistant improving agents, weather resistant stabilizers, matting agents, UV absorbers, nucleating agents, plasticizers, dispersants, flame retardants, antistatic agents, anti-coloration agents, anti-gelling agents, colorants, release agents, surfactants, dyes, and the like may be added within a scope that does not impair the object and effect of the present embodiment. For details of these additives, reference can be made to the descriptions in paragraphs [0130] to [0155] of JP 4894982 B, paragraph [0021] of JP 2010-281027 A, and paragraph [0036] of JP 2016-223037 A, the contents of which are incorporated in the present specification.

The filament of the present embodiment does not contain a plasticizer, or the content of the plasticizer may be less than 0.5 parts by mass, and preferably 0.4 parts by mass or less, with respect to 100 parts by mass of the polyamide resin. In the present embodiment, such a configuration can be employed because the compound with a molecular weight of 310 or more and 1000 or less can serve a role as a plasticizer.

In the filament of the present embodiment, the total of the polyamide resin (A), the compound with a molecular weight of 310 or more and 1000 or less, and optionally blended other components (e.g., thermoplastic resins and additives) is adjusted to 100 mass%.

Form and Physical Property of Filament

The filament of the present embodiment may be a monofilament or a multifilament and is preferably a multifilament. By forming a multifilament, processing into a structure becomes easy.

In a case where the filament of the present embodiment is a multifilament, the number of filaments constituting one multifilament is preferably 10 or more, more preferably 20 or more, and even more preferably 30 or more. Furthermore, the upper limit of the number of the filaments constituting one multifilament is preferably 100 or less, more preferably 60 or less, and even more preferably 55 or less. Setting the number in such a range allows fusion of single yarns during spinning to be prevented while patches of single fiber fineness during spinning is suppressed.

The cross section of the filament of the present embodiment is typically circular. Note that the circular includes those roughly circular in the technical field of the present embodiment in addition to circular in a geometrical sense. Furthermore, the cross section of the filament in the present embodiment may be a shape other than circular, and examples thereof include flat shapes such as an ellipse and an oval.

The filament of the present embodiment preferably has a single fiber fineness from $2.0 \times 10^{-5}$ to 50 dtex. By setting the single fiber fineness to not lower than the lower limit value, stable spinning can be performed, and adequate strength can be imparted to a structure when processing into a structure is performed. Furthermore, by setting the single fiber fineness to not higher than the upper limit value, pore size when a structure is formed can be made small, dust collection performances can be improved, and pressure loss can be effectively suppressed. The lower limit of the single fiber fineness is preferably $8.0 \times 10^{-5}$ dtex or more, more preferably $9.0 \times 10^{-3}$ dtex or more, even more preferably $1.0 \times 10^{-2}$ dtex or more, yet even more preferably 0.5 dtex or more, and yet even more preferably 1 dtex or more. Furthermore, the upper limit of the single fiber fineness is preferably 40 dtex or less, more preferably 30 dtex or less, even more preferably 25 dtex or less, yet even more preferably 20 dtex or less, and yet even more preferably 18 dtex or less.

Furthermore, the filament of the present embodiment is preferably from 10 to 1000 dtex in a case where the filament is a multifilament. By setting the single fiber fineness to not lower than the lower limit value, stable spinning can be performed, and adequate strength can be imparted to a structure when processing into a structure is performed.

Furthermore by setting the single fiber fineness to not higher than the upper limit value, pore size when a structure is formed can be made small, dust collection performances can be improved, and pressure loss can be effectively suppressed. The lower limit of the fineness of the multifilament is preferably 40 dtex or more, more preferably 60 dtex or more, and even more preferably 100 dtex or more. Furthermore, the upper limit of the fineness of the multifilament is preferably 800 dtex or less, more preferably 600 dtex or less, and even more preferably 400 dtex or less.

The fineness is measured in accordance with the method described in Examples below.

The filament length (mass average length) of the present embodiment is not particularly specified but is preferably 5 mm or more, more preferably 0.1 m or more, even more preferably 1 m or more, and yet even more preferably 100 m or more. Furthermore, the upper limit value of the length of the filament (mass average length) is preferably 20000 m or less, more preferably 1000 m or less, and even more preferably 100 m or less.

The filament of the present embodiment may be stretched or not stretched but is preferably stretched. By being stretched, a filament having superior mechanical strength can be obtained. The stretching is preferably performed in a length direction (filament length direction) of the filament. The stretching ratio is preferably 2.0 times or more, more preferably 2.5 times or more, even more preferably 3.0 times or more, and yet even more preferably 3.5 times or more. The upper limit of the stretching ratio is preferably 6.5 times or less, more preferably 6.0 times or less, even more preferably 5.5 times or less, and yet even more preferably 5.0 times or less.

The filament of the present embodiment preferably has excellent strength.

Specifically, the linear strength of the filament in accordance with JIS L 1013:2010 is preferably 4.25 cN/dtex or more, more preferably 4.30 cN/dtex or more, and even more preferably 4.35 cN/dtex or more. The upper limit value of the linear strength is not particularly specified but is practically 6.50 cN/dtex or less.

The filament of the present embodiment preferably has excellent water absorption properties.

Specifically, the tensile strength retention percentage at the time when the filament is dried at 80°C for 24 hours and subsequently immersed in water at 23°C for 1 week is preferably 85% or more, and more preferably 90% or more. The upper limit value of the retention percentage is ideally 100% but is practically 99.9% or less.

The filament of the present embodiment preferably also has excellent chemical resistance.

Specifically, when the filament is subjected to moisture conditioning for 1 week in an environment at 23°C and a relative humidity of 50% and subsequently immersed in hydrochloric acid with a concentration of 10 mass% for 1 week, the filament has a retention percentage of preferably 90% or more, and more preferably 91% or more, with respect to a tensile strength before chemical solution immersion. The upper limit value of the retention percentage is ideally 100% but is practically 99.9% or less.

Furthermore, when the filament is subjected to moisture conditioning for 1 week in an environment at 23°C and a relative humidity of 50% and subsequently immersed in an aqueous sodium hydroxide solution with a concentration of 10 mass% for 1 week, the filament has a retention percentage of preferably 90% or more, and more preferably 91% or more, with respect to a tensile strength before chemical solution immersion. The upper limit value of the retention percentage is ideally 100% but is practically 99.9% or less.

In the present embodiment, one of the retention percentage after the hydrochloric acid immersion described above or the retention percentage after the aqueous sodium hydroxide solution immersion described above is required to be satisfied; however, both of these are preferably satisfied. Furthermore, the retention percentage after the water absorption described above is preferably also satisfied together.

Method for Producing Filament

Next, a method for producing the filament of the present embodiment will be described.

The filament of the present embodiment is obtained by shaping the resin composition described above. The shaping method can be freely chosen, and shaping into a desired shape may be performed by a freely chosen known shaping method. For example, reference can be made to the disclosure of paragraphs [0051] to [0058] of WO 2017/010389, the contents of which are incorporated herein by reference.

In the present embodiment, in particular, the filament is preferably produced by a melt spinning method or an electrospinning method. The melt spinning method is a method in which extrusion through a multi-hole die is performed by an extruder and stretching is performed by passing through a roll. Furthermore, the electrospinning method is a method in which a resin is dissolved in a solvent, and when the dissolved resin solution is discharged from a thin nozzle, an electric field is applied during discharging of the resin solution to electrify the resin solution itself, thus stretching is performed by the potential difference, and the solvent is volatilized.

Structure

The structure of the present embodiment contains the filament of the present embodiment. The structure of the present embodiment refers to a structure in which the filament of the present embodiment keeps a filament form.

Note that "keep" means that a filament form is substantially maintained, and includes a case where a part (e.g., 10 vol.% or less) of a filament is melted and bonded with, for example, another constituent material (e.g., another fiber or substrate) that may be contained in another filament or structure.

The structure of the present embodiment may be a thready material such as mixed fiber yarn, braid, twisted string, yarn, or string having a core-in-sheath structure, containing the filament of the present embodiment. In a case where a mixed fiber yarn is formed, the filament is preferably combined with another thermoplastic resin filament, reinforcement fiber (filament) such as a carbon fiber or glass fiber, or the like.

The structure of the present embodiment is preferably a filament, a non-woven fabric, an adsorbent, a filter fabric, a filter paper, or a filter, which includes the filament of the present embodiment. The filament, non-woven fabric, adsorbent, filter fabric, filter paper, or filter of the present embodiment includes a filament such as mixed fiber yarn, braid, or twisted string, a non-woven fabric, an adsorbent, a filter fabric, a filter paper, or a filter, which uses the filament of the present embodiment.

An example of the structure of the present embodiment is a plate-like structure consisting of a layer containing the filament of the present embodiment as a main component. Furthermore, another example of the structure of the present embodiment is a multilayered material including a layer containing the filament of the present embodiment as a main component, and a substrate. Furthermore, the structure of the present embodiment may be a multilayered material including a layer containing the filament of the present embodiment as a main component, another non-woven fabric, a filter, and/or the like. The layer containing the filament of the present embodiment as a main component means that a component having a largest content among constituent structure of the layer is the filament of the present embodiment. Furthermore, examples of another non-woven fabric, a filter, and/or the like include non-woven fabric and filters that are made of polyolefin (preferably polypropylene).

When the structure of the present embodiment is used as a filter, a target object is not particularly specified, and examples thereof include slime of water treatment, gel, protein, and polysaccharide substance LPS whose removal is necessary in seawater recycle.

When the structure of the present embodiment is used as a filter, the density is preferably from 1.10 to 1.25 $g/cm^3$. Furthermore, the pore size of the filter is preferably from 0.001 to 500 $\mu$m.

Examples of the method for producing the filter include an air-blow method and a melt-blow method. The air-blow method is a method in which a filament is extruded from a multi-hole die, melted and solidified, and then blown onto a substrate in a web-like form by air blowing. The melt-blow method is a method in which a resin composition is extruded in a molten state and blown onto a substrate in a web-like form.

Resin Composition

Next, a resin composition of the present embodiment will be described.

The resin composition of the present embodiment is a resin composition containing a polyamide resin and a compound with a molecular weight of 310 or more and 1000 or less, the polyamide resin containing diamine-derived structural units and dicarboxylic acid-derived structural units, 70 mol% or more of the diamine-derived structural units being derived from xylylenediamine, and 70 mol% or more of the dicarboxylic acid-derived structural units being derived from $\alpha,\omega$-linear aliphatic dicarboxylic acid having from 11 to 14 carbons, in which a content of the compound with the molecular weight of 310 or more and 1000 or less is 0.1 mass% or more and 1.5 mass% or less, and a content of a compound with a molecular weight of less than 310 is 0.1 mass% or less. The resin composition is preferably used for production of the filament of the present embodiment, a non-woven fabric, an adsorbent, a filter fabric, a filter paper, or a filter.

The details and the like of the polyamide resin (A) in the resin composition of the present embodiment are similar to or the same as the filament of the present embodiment described above. Preferred ranges are also similar or the same.

Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

Example 1

Synthesis of Polyamide MP12

In a jacketed reactor equipped with an agitator, a partial condenser, a cooler, a thermometer, a dripping tank, and a nitrogen gas introduction tube, precisely weighed 60.00 mol of 1,12-dodecanedioic acid was placed, then the reactor was sufficiently purged with nitrogen and the temperature was increased to 180°C under a small amount of nitrogen gas stream, and thus the 1,12-dodecanedioic acid was dissolved to form a uniformly fluidized state. To this, 60 mol of p/m-xylylenediamine containing a diamine component in which 30 mol% was p-xylylenediamine and 70 mol% was m-xylylenediamine was added dropwise over 160 minutes while agitation was performed. At this time, the inner pressure of the reaction system was at normal pressure, and the internal temperature was continuously increased to 250°C. The water that distilled out along with the dropwise addition of the p/m-xylylenediamine was removed from the system through the partial condenser and the cooler. After completion of the dropwise addition of the p/m-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 30 minutes. Thus, a component amount with a molecular weight of 1000 or less was adjusted. At this time, the reaction temperature was continuously increased to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pallet shape, and thus pellets of a melt polymerization product were obtained. At room temperature, the obtained pellets were charged in a tumbler (rotational vacuum chamber) equipped with a jacket of heat medium heating. Inside of the chamber was set to a reduced pressure condition (0.5 to 10 Torr) while the tumbler was rotated, the circulating heat medium was heated to 150°C, and the pellet temperature was increased to 130°C and this temperature was maintained for 3 hours. Thereafter, nitrogen was introduced again to set the pressure to normal pressure, and cooling was started. When the temperature of the pellets became 70°C or lower, the pellets were taken out from the chamber, and thus a solid phase polymerization product was obtained.
The melting point of the obtained polyamide resin (MP12) was 206°C.

Production of Polyamide Filament

The polyamide resin listed in Table 1 was melted by using a single screw extruder and spun through a spinneret (the hole count is listed in Table 1) at the spinning temperature of 290°C. After the spun polyamide filament was passed through a hot zone and a cooling zone, the polyamide filament that was approximately at room temperature (hereinafter, also referred to as "filament before stretching") was immersed in a sizing agent (DELION PP-807, available from Takemoto Oil & Fat Co., Ltd.), formed into a bundle form, and drawn by a roll 1 which was not heated and thus stretched continuously without being wound temporarily. The filament before stretching drawn by the roll 1 was heated by passing through a roller 2 heated at 80°C, subsequently passed through a roller 2, a roller 3, and a roller 4, which were heated at 170°C, and then wound by a winder. At this time, stretching was performed by providing a speed ratio for the roller 2 and the roller 3, and the speed ratio was adjusted to achieve a stretching ratio listed in Table 1. Furthermore, relaxation was performed by providing a speed ratio of the roller 3 and the roller 4, and the number of rotation of the roller 4 was slower than that of the roller 3 by 4%.

Measurement of Oligomer Amount

The amount of oligomer with a molecular weight of less than 310 and the amount of oligomer with a molecular weight of 310 to 1000 were determined by gel permeation chromatography (GPC) analysis based on calibration with standard polymethylmethacrylate (PMMA).
Two columns, in which a styrene-based polymer was charged as a filler was used as columns. Hexafluoroisopropanol (HFIP) having a sodium trifluoroacetate concentration of 2 mmol/L was used as a solvent. Thus, the measurement was performed using a resin concentration of 0.02 mass%, a column temperature of 40°C, a flow rate of 0.3 mL/min, and using a refractive index detector (RI). Furthermore, a calibration curve was created by measuring six levels of PMMA dissolved in HFIP. The amount of oligomer with a molecular weight of less than 310 and the amount of oligomer with a molecular weight of 310 to 1000 are shown as an amount (mass%) with respect to the total amount polyamide resins with molecular weights of 1000 or more. Note that each component are obtained as area% in GPC; however, since the area% is equivalent to mass%, this value is listed as mass%.
The gel permeation chromatography instrument used in the present examples was "HLC-8320GPC" (available from Tosoh Corporation), and a column for the measurement was "TSKgel SuperHM-H".

Fineness

In accordance with a stipulation of JIS L 1013:2010, the fineness of the filament (single fiber fineness, fineness of multifilament) was measured. The fineness was expressed in units of dtex.

Continuous Spinnability

After spinning, a nozzle was checked for a degree of dirt adhesion, and the nozzle was evaluated as follows for the adhered substance with a component having a molecular weight of 330 or less on the nozzle. Five experts conducted the evaluation, and the result was determined based on a majority vote.

A: None, or substantially no adhered substance was observed.
B: Except for A above. For example, adhered substance was observed, affecting the continuous spinnability, or the like.

Linear Strength

In accordance with JIS L 1013:2010, the linear strength of the filament was measured.
Units are shown in cN/dtex.

Water Absorption Resistance

A filament dried at 80°C for 24 hours by a vacuum dryer was immersed in water at 23°C for 1 week, and a retention percentage with respect to a tensile strength before water immersion was evaluated. The tensile strength was measured in accordance with JIS L 1013:2010.

$$\text{Tensile strength retention percentage} = [(\text{tensile strength before water immersion} - \text{tensile strength after water immersion})/\text{tensile strength before water immersion}] \times 100 \ (\text{unit: \%})$$

Units are shown in %.

Chemical Resistance

After a filament was subjected to moisture conditioning in an environment at 23°C and at a relative humidity of 50% for 1 week, and subsequently the filament was immersed in a chemical solution (an aqueous hydrochloric acid solution with a concentration of 10 mass% or an aqueous sodium hydroxide solution with a concentration of 10 mass%) for 1 week, a retention percentage with respect to a tensile strength before chemical solution immersion was evaluated. The tensile strength was measured in accordance with JIS L 1013:2010.

$$\text{Tensile strength retention percentage} = [(\text{tensile strength before chemical immersion} - \text{tensile strength after chemical immersion})/\text{tensile strength before chemical immersion}] \times 100$$

Units are shown in %.

Example 2

The same operation was performed except for changing the polyamide resin in Example 1 to a polyamide MXD12 described in Synthesis Example below.

Synthesis of Polyamide MXD12

In a jacketed reactor equipped with an agitator, a partial condenser, a cooler, a thermometer, a dripping tank, and a nitrogen gas introduction tube, precisely weighed 60.00 mol of 1,12-dodecanedioic acid was placed, then the reactor was sufficiently purged with nitrogen and the temperature was increased to 180°C under a small amount of nitrogen gas stream, and thus the 1,12-dodecanedioic acid was dissolved to form a uniformly fluidized state. To this, 60 mol of m-xylylenediamine was added dropwise over 160 minutes while agitation was performed. At this time, the inner pressure of the reaction system was at normal pressure, and the internal temperature was continuously increased to 250°C. The water that distilled out along with the dropwise addition of the m-xylylenediamine was removed from the system through the partial condenser and the cooler. After completion of the dropwise addition of the m-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 30 minutes. Thus, a component amount with a molecular weight of 1000 or less was adjusted. At this time, the reaction temperature was continuously increased to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pallet shape, and thus pellets of a melt polymerization product were obtained. At room temperature, the obtained pellets were charged in a tumbler (rotational vacuum chamber) equipped with a jacket of heat medium heating. Inside of the chamber was set to a reduced pressure condition (0.5 to 10 Torr) while the tumbler was rotated, the circulating heat medium was heated to 150°C, and the pellet temperature was increased to 130°C and this temperature was maintained for 3 hours. Thereafter, nitrogen was introduced again to set the pressure to normal pressure, and cooling was started. When the temperature of the pellets became 70°C or lower, the pellets were taken out from the chamber, and thus a solid phase polymerization product was obtained.

The melting point of the obtained polyamide resin (MXD12) was 190°C.

Comparative Example 1

The same operation was performed except for changing the polyamide resin in Example 1 to a polyamide MP10 described in Synthesis Example below.

Synthesis Example of Polyamide MP10 (M/P Ratio = 7:3)

In a jacketed reactor equipped with an agitator, a partial condenser, a cooler, a thermometer, a dripping tank, and a nitrogen gas introduction tube, sebacic acid was placed, heated and dissolved in a nitrogen atmosphere, then, while the contents were agitated and while a diamine mixture (available from Mitsubishi Gas Chemical Company, Inc.) having a molar ratio of m-xylylenediamine to p-xylylenediamine of 7:3 was gradually added dropwise under increased pressure (0.35 MPa) to give a molar ratio of the diamines to sebacic acid of approximately 1:1, the temperature was increased to 235°C. After completion of the dropwise addition, the reaction was continued for 60 minutes, and the amount of components with a molecular weight of 1000 or less was adjusted. After completion of the reaction, the contents were taken out in the form of strands and pelletized with a pelletizer, and a polyamide resin (MP10, M/P = 7:3) was obtained.

The melting point of the obtained polyamide resin (MP10) was 215°C.

Comparative Example 2

The same operation was performed except for changing the polyamide resin in Example 1 to PA66 (nylon 66, AMILAN CM3001, available from Toray Industries, Inc.; melting point: 265°C).

Comparative Example 3

The same operation was performed except for changing the polyamide resin in Example 1 to a polyamide MP12 described in Synthesis Example below.

Synthesis of Polyamide MP12

In a separable flask made of SUS with a volume of 3 L, 1 kg of a polyamide resin (MP12) obtained by the synthesis method same as in the method described in Example 1 was charged, 1.5 L of methanol was charged, and while the contents were agitated, heating was performed to make the liquid temperature of methanol 60°C using a heating mantle. Heating was performed for 5 hours since the time at which the liquid temperature of methanol reached 60°C, and then cooling to room temperature was performed. The contents were then filtered through a 40 mesh wire netting and separated into a methanol phase and pellets. For the separated pellets, the operation described above was repeated for three times, and then the pellets were dried at 120°C for 5 hours by a vacuum dryer. Thus, a resin used in Comparative Example 3 was obtained.

Comparative Example 4

The same operation was performed except for changing the polyamide resin in Example 1 to a polyamide MP12 described in Synthesis Example below.

Synthesis of Polyamide MP12

A resin used for Comparative Example 4 was obtained by adding 1 mass% of an oligomer with a molecular weight of 310 to 1000 in the polyamide resin (MP12) obtained by the synthesis method same as in the method described in Example 1, and dry-blending. Note that, as the oligomer having a molecular weight of 310 to 1000, an oligomer obtained by subjecting the methanol phase after the treatment described in Comparative Example 3 to evaporation to dryness was used.

[Table 1]

| | | | Example 1 | Example 2 | Comparative Example 1 | Comparative Example 2 | Comparative Example 3 | Comparative Example 4 |
|---|---|---|---|---|---|---|---|---|
| Polyamide resin | | | MP12 | MXD12 | MP10 | PA66 | MP12 | MP12 |
| Oligomer amount | Molecular weight: less than 310 | mass% | <0.1 | <0.1 | 1.1 | 0.4 | <0.1 | <0.1 |
| | Molecular weight: 310 or more and 1000 or less | mass% | 0.8 | 0.8 | 0.3 | 0.5 | <0.1 | 1.9 |
| Stretching ratio | | Times | 3.8 | 3.8 | 2.5 | 4.0 | 3.8 | 3.8 |
| Fineness of multifilament | | dtex | 233 | 236 | 167 | 235 | 233 | 233 |
| Single fiber fineness | | dtex | 4.9 | 4.9 | 4.6 | 9.8 | 4.9 | 4.9 |
| Number of filaments (number of holes of spinneret) | | | 48 | 48 | 36 | 24 | 48 | 48 |
| Continuous spinnability | | | A | A | B | A | A | B |
| Linear strength | | cN/dtex | 4.42 | 4.55 | 4.34 | 6.21 | 4.20 | 4.23 |
| Water absorption resistance | | % | 94 | 95 | 93 | 86 | 92 | 91 |
| Chemical resistance | Hydrochloric acid resistance | % | 92 | 93 | 86 | 73 | 92 | 93 |
| | Aqueous sodium hydroxide solution resistance | % | 96 | 95 | 89 | 96 | 96 | 97 |

EP 4 227 346 A1

13

In the table above, "<0.1" means less than 0.1 mass%.

As is clear from the results above, each of the filaments of embodiments of the present invention had excellent linear strength and high retention percentage of the tensile strength after water absorption (Examples 1 and 2). Furthermore, the filament also had excellent continuous productivity and chemical resistance.

Meanwhile, in the case where the polyamide resin made from xylylenediamine and sebacic acid ($\alpha,\omega$-linear aliphatic dicarboxylic acid having 10 carbons) was used (Comparative Example 1), both of the linear strength and the retention percentage of the tensile strength after water absorption were poor. Furthermore, the continuous productivity was also poor.

Furthermore, in the case where the polyamide 66 was used (Comparative Example 2), although excellent linear strength was achieved, the retention percentage of the tensile strength after water absorption was significantly poor. Furthermore, the chemical resistance (hydrochloric acid resistance) was also significantly poor.

In the case where a polyamide resin having the content of the compound with a molecular weight of 310 or more and 1000 or less of less than 0.1 mass% was used (Comparative Example 3), and in the case where greater than 1.5 mass% of the polyamide resin was used (Comparative Example 4), both had poor linear strength.

## Claims

1. A filament comprising a polyamide resin, the polyamide resin comprising diamine-derived structural units and dicarboxylic acid-derived structural units, 70 mol% or more of the diamine-derived structural units being derived from xylylenediamine, and 70 mol% or more of the dicarboxylic acid-derived structural units being derived from $\alpha,\omega$-linear aliphatic dicarboxylic acid having from 11 to 14 carbons, wherein

   a content of a compound with a molecular weight of 310 or more and 1000 or less is 0.1 mass% or more and 1.5 mass% or less, and
   a content of a compound with a molecular weight of less than 310 is 0.1 mass% or less.

2. The filament according to claim 1, wherein the filament is stretched.

3. The filament according to claim 1 or 2, wherein the compound with the molecular weight of 310 or more and 1000 or less comprises a cyclic compound containing one molecule of xylylenediamine and one molecule of $\alpha,\omega$-linear aliphatic dicarboxylic acid having from 11 to 14 carbons.

4. The filament according to any one of claims 1 to 3, wherein from 30 to 100 mol% of the diamine-derived structural units are derived from m-xylylenediamine, and from 0 to 70 mol% of the diamine-derived structural units are derived from p-xylylenediamine.

5. The filament according to any one of claims 1 to 4, wherein 70 mol% or more of the dicarboxylic acid-derived structural units are 1,12-dodecanedioic acid.

6. The filament according to any one of claims 1 to 5, wherein, when the filament is subjected to moisture conditioning for 1 week in an environment at 23°C and a relative humidity of 50% and subsequently immersed in hydrochloric acid with a concentration of 10 mass% for 1 week, the filament has a retention percentage of 90% or more with respect to a tensile strength before chemical solution immersion, and when the filament is subjected to moisture conditioning for 1 week in an environment at 23°C and a relative humidity of 50% and subsequently immersed in an aqueous sodium hydroxide solution with a concentration of 10 mass% for 1 week, the filament has a retention percentage of 90% or more with respect to a tensile strength before chemical solution immersion.

7. The filament according to any one of claims 1 to 6, wherein a single fiber fineness is from $2.0 \times 10^{-5}$ to 50 dtex.

8. The filament according to any one of claims 1 to 7, wherein the filament is a multifilament.

9. A structure comprising the filament according to any one of claims 1 to 8.

10. The structure according to claim 9, wherein the structure is a non-woven fabric, an adsorbent, a filter fabric, a filter paper, or a filter.

11. A resin composition comprising a polyamide resin and a compound with a molecular weight of 310 or more and 1000 or less, the polyamide resin comprising diamine-derived structural units and dicarboxylic acid-derived structural units, 70 mol% or more of the diamine-derived structural units being derived from xylylenediamine, and 70 mol% or more of the dicarboxylic acid-derived structural units being derived from $\alpha,\omega$-linear aliphatic dicarboxylic acid having from 11 to 14 carbons, wherein

a content of the compound with the molecular weight of 310 or more and 1000 or less is 0.1 mass% or more and 1.5 mass% or less, and
a content of a compound with a molecular weight of less than 310 is 0.1 mass% or less.

12. The resin composition according to claim 11, wherein the filament is for a non-woven fabric, an adsorbent, a filter fabric, a filter paper, or a filter.

13. A method for producing the filament according to any one of claims 1 to 8, the method comprising spinning a resin composition according to claim 11 by a melt spinning method or an electrospinning method.

## INTERNATIONAL SEARCH REPORT

| International application No. |
| --- |
| **PCT/JP2021/032063** |

**A. CLASSIFICATION OF SUBJECT MATTER**

*C08G 69/26*(2006.01)i; *D01F 6/60*(2006.01)i; *D01F 6/80*(2006.01)i
FI: C08G69/26; D01F6/60 361A; D01F6/80 321A

According to International Patent Classification (IPC) or to both national classification and IPC

**B. FIELDS SEARCHED**

Minimum documentation searched (classification system followed by classification symbols)

C08G69/00-69/50, C08K3/00-13/08, C08L1/00-101/14, D01F1/00-6/96;9/00-9/04, C08J5/00-5/02;5/12-5/22,106

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-240146 A (UBE IND., LTD.) 25 December 2014 (2014-12-25) claims, examples | 11 |
| A | | 1-10, 12-13 |
| Y | JP 48-63050 A (TORAY IND., INC.) 03 September 1973 (1973-09-03) claims, page 3, lower left column, lines 18-20, examples | 1-13 |
| Y | JP 2002-339163 A (UNITIKA FIBERS LTD.) 27 November 2002 (2002-11-27) paragraphs [0033]-[0038] | 1-13 |
| Y | JP 62-54725 A (TEIJIN LTD.) 10 March 1987 (1987-03-10) page 4, lower right column, lines 5-9 | 1-13 |
| Y | WO 2014/132775 A1 (MITSUBISHI GAS CHEMICAL COMPANY, INC.) 04 September 2014 (2014-09-04) paragraphs [0031], [0033]-[0034] | 1-13 |
| A | JP 2011-527369 A (ARKEMA FRANCE) 27 October 2011 (2011-10-27) claims, examples | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 October 2021** | **02 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2021/032063**

**C.    DOCUMENTS CONSIDERED TO BE RELEVANT**

| Category* | Citation of document, with indication, where appropriate, of the relevant passages | Relevant to claim No. |
|---|---|---|
| P, X | WO 2020/250564 A1 (MITSUBISHI GAS CHEMICAL COMPANY, INC.) 17 December 2020 (2020-12-17) claims, paragraphs [0028], [0032], examples | 1-6, 8-13 |
| P, A | | 7 |

Form PCT/ISA/210 (second sheet) (January 2015)

## INTERNATIONAL SEARCH REPORT
### Information on patent family members

International application No.

**PCT/JP2021/032063**

| Patent document cited in search report | | | Publication date (day/month/year) | Patent family member(s) | Publication date (day/month/year) |
|---|---|---|---|---|---|
| JP | 2014-240146 | A | 25 December 2014 | (Family: none) | |
| JP | 48-63050 | A | 03 September 1973 | (Family: none) | |
| JP | 2002-339163 | A | 27 November 2002 | (Family: none) | |
| JP | 62-54725 | A | 10 March 1987 | (Family: none) | |
| WO | 2014/132775 | A1 | 04 September 2014 | US 2016/0002832 A1 paragraphs [0051], [0055]-[0057] EP 2963166 A1 CN 105026631 A KR 10-2015-0120967 A | |
| JP | 2011-527369 | A | 27 October 2011 | US 2011/0165359 A1 claims, examples EP 2297227 A1 CN 102089354 A | |
| WO | 2020/250564 | A1 | 17 December 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019163062 A
- JP 4894982 B
- JP 2010281027 A
- JP 2016223037 A
- WO 2017010389 A